# EUROPÄISCHE PATENTSCHRIFT

(11) **EP 0 604 722 B1**
(45) Veröffentlichungstag und Bekanntmachung des Hinweises auf die Patenterteilung: **14.05.1997**
(21) Anmeldenummer: 93116743.1
(22) Anmeldetag: 16.10.1993
(51) Int. Cl.: G01D 5/34, G01D 5/36

(54) **Längen- oder Winkelmesseinrichtung**
Device for measuring lengths or angles
Dispositif de mesure de longeurs ou d'angles

(30) Priorität: 24.12.1992 DE 4244178
(43) Veröffentlichungstag der Anmeldung: 06.07.1994
(73) Patentinhaber: Dr. Johannes Heidenhain GmbH, D-83292 Traunreut (DE)
(72) Erfinder: Miller, Walter, Dr., D-83278 Traunstein (DE)

(56) Entgegenhaltungen:
- EP-A- 0 246 404
- EP-A- 0 268 558
- EP-A- 0 395 844

## Beschreibung

Die Erfindung betrifft eine Längen- oder Winkelmeßeinrichtung mit wenigstens einer Inkrementalteilung, der mindestens zwei weitere Teilungen in Form von beabstandeten Referenzmarken zum Bestimmen von absoluten Positionen zugeordnet sind, wobei eine Abtasteinheit die Inkrementalteilung zur Erzeugung von Zählsignalen und die Referenzmarken zur Erzeugung von Referenzmarkenimpulsen abtastet.

Derartige Meßeinrichtungen werden insbesondere bei Bearbeitungsmaschinen zur Messung der Relativlage eines Werkzeuges bezüglich eines zu bearbeitenden Werkstücks sowie bei Koordinatenmeßmaschinen zur Ermittlung von Lage und Abmessungen von Prüfobjekten eingesetzt.

Die an den Referenzmarken erzeugten elektrischen Impulse können zum Reproduzieren von Referenzpositionen im Zähler, zum Anfahren einer bestimmten Position zu Beginn einer Messung, zur Kontrolle und Korrektur des Zählerstandes sowie zur Beaufschlagung einer nachgeschalteten Steuereinrichtung dienen.

Um bei inkrementalen Meßeinrichtungen die Absolutposition zu ermitteln, sind zwei Grundprinzipien bekannt:

Bei dem einen Prinzip ist parallel zur Inkrementalteilung eine Reihe von Referenzmarken in festgelegten Abständen angebracht. Jeder Referenzmarke, die beim Meßvorgang zur Wirkung gelangen soll, ist ein Schaltmittel zugeordnet. Die elektrischen Ausgänge des Schaltmittels und des Abtastelementes der Referenzmarken sind an eine Auswerteeinheit angeschlossen, die nur dann einen Steuerimpuls an den Zähler abgibt, wenn gleichzeitig am Abtastelement und am Schaltmittel ein elektrisches Signal anliegt. Der Steuerimpuls bewirkt, daß im Zähler ein vorbestimmter Zählerwert gesetzt wird. Derartige Meßeinrichtungen sind aus der DE 25 40 412 C3, DE 29 48 854 C2, DE 32 45 914 C1, DE 30 39 483 Al, DE 30 37 810 C2 sowie der EP 0 480 904 A2 bekannt.

Bei dem weiteren Prinzip ist ebenfalls parallel zur Inkrementalteilung eine Referenzmarkenspur angeordnet. Die Bestimmung der Absolutposition einer Referenzmarke erfolgt durch Zählen der Meßschritte (Inkremente) zwischen zwei Referenzmarken. Eine derartige Meßeinrichtung ist aus der DE 24 16 216 C bekannt. Der Maßstab weist eine inkrementale Teilungsspur und eine weitere parallel angeordnete Spur mit gleichen Referenzmarken auf. Jede Referenzmarke hat von der nächstfolgenden einen besonderen, den Absolutwert ihres Abstandes von einer Nullposition kennzeichnenden Abstand. Diese unterschiedlichen Abstände zwischen benachbarten Referenzmarken werden durch die Abtastung der inkrementalen Teilung ermittelt.

Aus der EP 0 268 558 A2 ist eine ähnliche Meßeinrichtung bekannt. Parallel neben einer inkrementalen Teilungsspur ist eine erste Referenzmarkenspur mit gleichabständigen Referenzmarken sowie zumindest eine weitere Referenzmarkenspur mit ebenfalls aufeinanderfolgend gleichabständigen Referenzmarken vorgesehen. Die Abstände der Referenzmarken beider Spuren sind aber unterschiedlich. Die Bestimmung der Absolutposition einer Referenzmarke bezüglich einer Nullposition erfolgt durch Verwendung der inkrementalen Teilungsspur, indem die Abstände aufeinanderfolgender Referenzmarken verschiedener ferenzmarkenspuren erfaßt werden.

Bei der DE 40 21 010 A1 werden zur Bestimmung der Absolutposition ebenfalls die Inkremente zwischen Referenzmarken gezählt. Neben einer inkrementalen Teilungsspur ist eine erste Spur mit fortlaufend unterschiedlich beabstandeten Referenzmarken sowie eine zweite Spur mit abschnittsweise gleichbeabstandeten Referenzmarken vorgesehen.

In der EP 0 246 404 A2 ist eine Meßeinrichtung offenbart, bei der parallel zu einer inkrementalen Teilung mehrere identische Referenzmarken in unterschiedlichen Abständen angeordnet sind. Zur Bestimmung der Absolutposition einer Referenzmarke werden zwei aufeinanderfolgende Abstände zwischen den drei in Meßrichtung vorangehenden Referenzmarken ermittelt. Diese beiden Abstände werden ebenfalls durch die Abtastung der inkrementalen Teilung erfaßt. Die Referenzmarken mit unterschiedlichen Abständen können auch auf mehreren parallel angeordneten Referenzmarkenspuren vorgesehen sein.

Es wurde bereits versucht, eine Meßeinrichtung zu schaffen, bei der beide Prinzipien in einer Baueinheit vereinigt sind. Diese Meßeinrichtung ist in der DE 39 14 739 C2 beschrieben. Parallel zur Inkrementalspur ist eine Referenzmarkenspur angeordnet, deren Referenzmarken aufeinanderfolgend unterschiedliche Abstände aufweisen. Durch Auszählen der Inkremente von einer Referenzmarke zur nächsten wird deren absolute Position bestimmt. Eine weitere Spur weist eine Reihe von Markierungen auf, die in gleichen Abständen angeordnet sind. Zur Auswahl von Referenzmarken sind diese Markierungen bestimmten Referenzmarken zugeordnet. Aus diesen Markierungen kann wiederum eine ausgewählt werden, wodurch nur die ihr zugeordnete Referenzmarke zur Wirkung gebracht wird. Es ist ein Betriebsarten-Umschalter vorgesehen, mit dem die Auswertung aller Referenzmarken oder die Auswertung nur der markierten Referenzmarken ermöglicht wird.

Diese Anordnung hat den Nachteil, daß bei großen Meßlängen die Abstände der Referenzmarken relativ groß werden um über die gesamte Meßlänge unterschiedliche Abstände zu erhalten. Bei sehr kleinen Meßlängen dagegen sind die Referenzmarken so eng nebeneinander angeordnet, daß eine Auswahl einer Referenzmarke mit einfachen Mitteln nicht möglich ist.

Der Erfindung liegt die Aufgabe zugrunde, durch Vereinheitlichung der Längen- oder Winkelmeßeinrichtung die Herstellungs- und Lagerkosten zu reduzieren und dem Anwender es zu ermöglichen, die Meßeinrichtung seinen Bedürfnissen anzupassen und somit die Einsatzmöglichkeiten der Meßeinrichtung zu erhöhen.

Diese Aufgabe wird durch die Meßeinrichtung mit den Merkmalen des Anspruches 1 gelöst.

In den abhängigen Ansprüchen sind vorteilhafte Ausgestaltungen der Erfindung angegeben.

Die Vorteile der Erfindung liegen darin, daß die Meßeinrichtung bereits alle Informationen für die unterschiedlichen Referenzmarken-Auswertungsarten beinhaltet, und daß durch die Betriebsartenumschaltung jederzeit die Art der Auswertung bestimmt werden kann.

Mit Hilfe von Ausführungsbeispielen wird die Erfindung nachstehend anhand der Zeichnungen näher erläutert.

Es zeigt
- Figur 1: eine lichtelektrische inkrementale Längenmeßeinrichtung;
- Figur 2: eine Anordnung der Inkrementalteilung und der Referenzmarken im Detail;
- Figur 3: eine weitere Anordnung von Referenzmarken und
- Figur 4: ein Prinzip einer Auswertevorrichtung für die Längenmeßeinrichtung gemäß Figur 1.

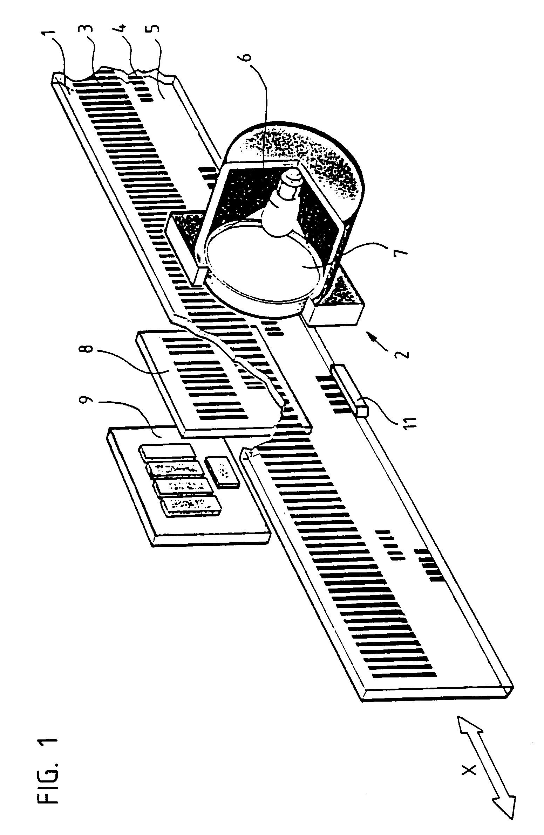

Die Figur 1 zeigt eine lichtelektrische inkrementale Längenmeßeinrichtung mit einem Maßstab 1 der relativ zu einer Abtasteinheit 2 in Meßrichtung X verschiebbar ist. Auf dem Maßstab 1 sind eine Inkrementalteilung 3, eine erste Teilung 4 mit Referenzmarken 41, 42, 43 und eine zweite Teilung 5 mit Referenzmarken 51, 52, 53, 54 aufgebracht. Zur lichtelektrischen Abtastung der Teilungen 3, 4 und 5 ist die feststehende Abtasteinheit 2 vorgesehen. Diese umfaßt eine Lichtquelle 6, deren Licht von einem Kollimator 7 gebündelt und auf die Teilungen 3, 4 und 5 gerichtet wird. Das Licht fällt durch die transparenten Bereiche der Teilungen 3, 4 und 5 sowie durch eine Abtastplatte 8 auf photoelektrische Empfänger 9.

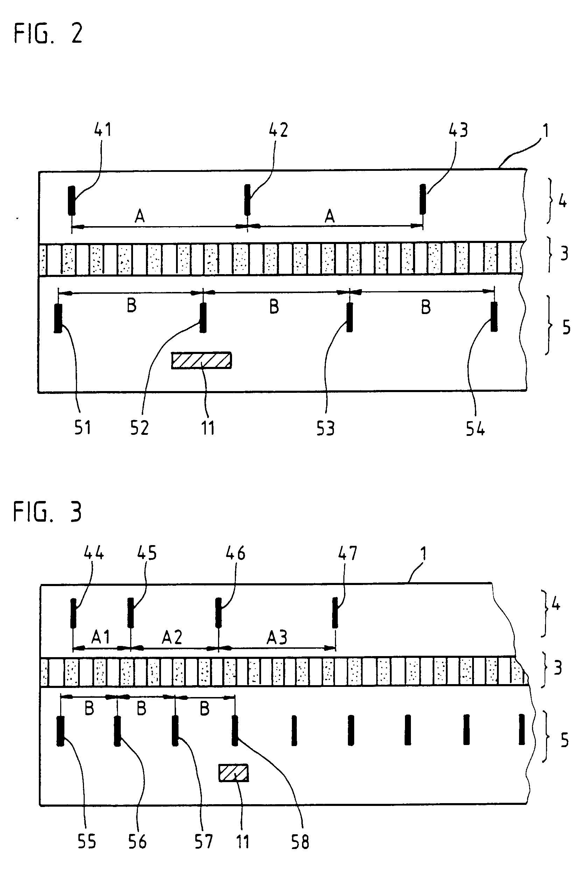

Wie in Figur 2 im Detail dargestellt ist, weist die Inkrementalteilung 3 gleichbreite Striche und Lükken auf. Bei der lichtelektrischen Abtastung werden periodische analoge elektrische Signale erzeugt, aus denen in bekannter Weise durch Triggerung zählbare Rechtecksignale gebildet werden, die nachfolgend als Zählsignale bezeichnet werden. Die parallel zur Inkrementalteilung 3 verlaufende erste Teilung 4 besteht aus hintereinander in gleichen Abständen A angeordneten Referenzmarken 41, 42, 43. Die ebenfalls parallel zur Inkrementalteilung 3 verlaufende zweite Teilung 5 besteht aus hintereinander in gleichen Abständen B angeordneten Referenzmarken 51, 52, 53, 54. Die Abstände A und B unterscheiden sich um eine ganze Anzahl von Inkrementen der Inkrementalteilung 3.

Jede der Referenzmarken 41, 42, 43 und 51, 52, 53, 54 besteht aus einer Kombination von Teilstrichen, die sich über mehrere Inkremente der Inkrementalteilung 3 erstreckt. Wenn eine derartige Referenzmarke 41, 42, 43; 51, 52, 53, 54 unter einer ihr zugeordneten Öffnung der Abtastplatte 8 durchläuft, erzeugt der zugeordnete Empfänger 9 einen, auf einen inkrementellen Zählimpuls zentrierten Referenzmarkenimpuls.

In Figur 1 sind die Teilungen 4, 5 in Spuren angeordnet, die auf einer Seite der Inkrementalteilung 3 liegen. In den Beispielen nach Figur 2 und 3 ist jeweils eine Spur der Teilungen 4, 5 auf der einen Seite und die andere Spur auf der anderen Seite der Inkrementalteilung 3 angeordnet.

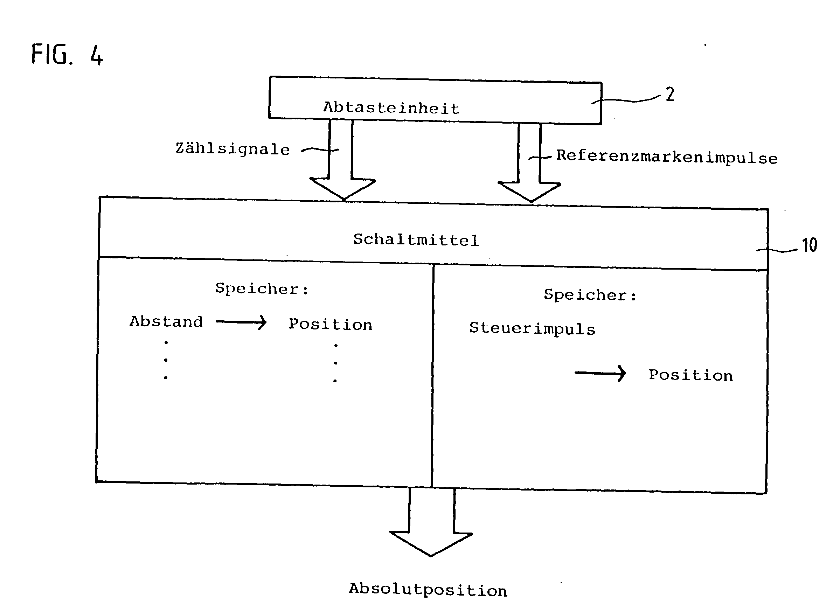

Durch die unterschiedlichen Abstände A und B ergeben sich unterschiedliche Abstände zwischen einer Referenzmarke 41, 42, 43 der einen Teilung 4 und einer Referenzmarke 51, 52, 53, 54 der anderen Teilung 5. Aus diesen unterschiedlichen Abständen werden die Absolutpositionen der Referenzmarken 41, 42, 43; 51, 52, 53, 54 bestimmt. Wie in Figur 4 schematisch dargestellt ist, werden hierzu die Zählsignale der Inkrementalteilung 3 sowie die Referenzmarkenimpulse der Teilungen 4 und 5 einer Auswerteeinheit mit einem Speicher zugeführt. In diesem Speicher ist den unterschiedlichen Abständen der Referenzmarken 41-51, 42-52, 43-53 jeweils ein Absolutwert zugeordnet. Bezüglich der Auswertung wird auch auf die EP 0 268 558 verwiesen, womit sich weitere Ausführungen erübrigen.

Erfindungsgemäß ist ein Schaltmittel 10 vorgesehen, mit dem zwischen der oben beschriebenen Betriebsart und der nachfolgend aufgeführten Betriebsart gewählt werden kann. Dieses Schaltmittel 10 ist vorzugsweise am Positionsanzeigegerät oder am Steuergerät angebracht. Der Anwender kann somit die Längenmeßeinrichtung seinen Bedürfnissen anpassen und flexibel einsetzen. Das Schaltmittel kann aber auch am Meßgerät selbst, beispielsweise an der Abtasteinheit 2 angeordnet sein.

Bei dieser zweiten Betriebsart wird ebenfalls die Inkrementalteilung 3 zur Erzeugung von Zählsignalen abgetastet. Gleichzeitig werden die Referenzmarken 51, 52, 53, 54 der Teilung 5 abgetastet. Einer dieser Referenzmarken 52 ist ein Auswahlmittel 11 zugeordnet, wodurch diese Referenzmarke 52 beim Überfahren von der Abtasteinheit 2 aus der Reihe von Referenzmarken 51, 52, 53, 54 auswählbar ist und somit zur Wirkung gebracht wird. Beim Erkennen dieser ausgewählten Referenzmarke 52 wird der Zählerstand des Positionsanzeigegerätes auf einen vorbestimmten Wert gesetzt. Wie in Figur 4 schematisch dargestellt, ist hierzu ein Speicher vorgesehen, in dem diese, der Referenzmarke 52 zugeordnete Absolutposition abgespeichert ist.

Mit dem Auswahlmittel 11 können somit aus der bereits bei der Teilungsherstellung in zueinander festgelegten Abständen angebrachten Reihe von Referenzmarken 51, 52, 53, 54 jeweils die beim Meßvorgang benötigten Referenzmarken 52 ausgewählt und zur Wirkung gebracht werden. Als Auswahlmittel 11 kann gemäß der DE 25 40 412 C3 ein Magnet verwendet werden, der beim Vorbeibewegen der Abtasteinheit 2 einen darauf angebrachten Reed-Schalter ansteuert, dessen elektrischer Ausgang zusammen mit dem Referenzmarkenimpuls an eine Auswerteeinheit gelegt ist, die so organisiert ist, daß an ihrem Ausgang nur dann ein Steuerimpuls abgegeben wird, wenn gleichzeitig am Ausgang des Reed-Schalters ein Signal sowie der Referenzmarkenimpuls anliegt.

Die Zuordnung und Auswertung der Auswahlmittel kann auch gemäß der DE 29 48 854 C2, der DE 32 45 914 C1, der DE 30 37 810 C2 sowie der EP 0 480 904 A2 erfolgen.

Die Verwendung von zwei Teilungen 4, 5 hat den Vorteil, daß die Referenzmarken 41, 51; 42, 52; 43, 53 deren Abstand ermittelt wird, sehr dicht angeordnet werden können und daß trotzdem genug Raum beidseitig einer Referenzmarke 52 zur Verfügung steht, um das Auswahlmittel 11 dieser Referenzmarke 52 eindeutig zuzuordnen.

Es ist auch möglich, den Referenzmarken 41, 42, 43 der Teilung 4 oder den Referenzmarken 41, 42, 43, 51, 52, 53, 54 beider Teilungen 4, 5 Auswahlmittel 11 zuzuordnen. Weiterhin können auch noch weitere Teilungen mit gleichbeabstandeten Referenzmarken vorgesehen sein.

Eine weitere vorteilhafte Ausgestaltung der Erfindung ist in Figur 3 dargestellt. Die Teilung 5 besitzt Referenzmarken 55, 56, 57, 58 mit zueinander gleichen Abständen B über die gesamte Meßlänge. Die weitere Teilung 4 weist Referenzmarken 44, 45, 46, 47 auf, deren Abstände A1, A2, A3 zueinander unterschiedlich sind. Zur Bestimmung der Absolutposition werden die Abstände zwischen den Referenzmarken 44 und 55, 45 und 56, 46 und 57 sowie 47 und 58 beider Teilungen 4, 5 ermittelt. Hierzu werden beispielsweise die Inkremente zwischen der Referenzmarke 45 und 56 gezählt. Es ist auch möglich, daß zur eindeutigen Zuordnung einer Absolutposition mehrere Abstände Verwendung finden.

Damit die erfindungsgemäße Umschaltung zwischen den beiden Betriebsarten möglich ist, sind der Teilung 5 Auswahlmittel 11 zuordbar, auf dessen Veranlassung wenigstens eine die Absolutposition bestimmende Referenzmarke 58 auswählbar ist und somit zur Wirkung gebracht wird.

Die Maßverkörperung 1 mit der Anordnung der Referenzmarken 44, 45, 46, 47; 55, 56, 57, 58 nach Figur 3 hat weiterhin den Vorteil, daß bei Bedarf die Teilung 4 nur bei der Betriebsart a) und die Teilung 5 ausschließlich bei der Betriebsart b) Verwendung findet. Das bedeutet, daß die Referenzmarken 44, 45, 46, 47 bei der einen Betriebsart a) wie in der DE 24 16 212 C oder der EP 0 246 404 A2 ausgewertet werden und die Referenzmarken 55, 56, 57, 58 bei der Betriebsart b) wie in der DE 25 40 412 C3 ausgewertet werden. Die Referenzmarken 44, 45, 46, 47 der Teilung 4 können unabhängig von den Referenzmarken 55, 56, 57, 58 der Teilung 5 angeordnet und ausgewertet werden.

Die Erfindung kann auch bei Winkelmeßeinrichtungen erfolgreich eingesetzt werden. Sie ist darüberhinaus nicht auf das lichtelektrische Abtastprinzip beschränkt.

## Patentansprüche

1. Längen- oder Winkelmeßeinrichtung mit wenigstens einer Inkrementalteilung (3), der mindestens zwei weitere Teilungen (4, 5) in Form von beabstandeten Referenzmarken (41 bis 47, 51 bis 58) zum Bestimmen von absoluten Positionen zugeordnet sind, von denen wenigstens eine Teilung (5) Referenzmarken (51 bis 58) mit zueinander gleichen Abständen (B) aufweist, mit einer Abtasteinheit (2), die die Inkrementalteilung (2) zur Bildung von Zählsignalen und die Referenzmarken (41 bis 47, 51 bis 58) zur Bildung von Referenzmarkenimpulsen abtastet, und die Zählsignale sowie die Referenzmarkenimpulse einem Positionsanzeigegerät und/oder einem Steuergerät zugeführt werden, weiterhin mit einem Schaltmittel (10), mit dem wahlweise folgende Betriebsarten auswählbar sind:
a) Abtasten der Inkrementalteilung (3) und gleichzeitig mindestens einer der Referenzmarkenteilungen (4, 5), wobei für die Absolutposition charakteristische Abstände (A, B) zwischen Referenzmarken (41 bis 47, 51 bis 58) aus den Zählsignalen ermittelt werden oder
b) Abtasten der Inkrementalteilung (3) und gleichzeitig der Teilung (5) mit den in gleichen Abständen (B) angeordneten Referenzmarken (51 bis 58), denen wenigstens ein Auswahlmittel (11) zuordbar ist, auf dessen Veranlassung wenigstens eine die Absolutposition bestimmende Referenzmarke (52, 58) auswählbar ist und somit zur Wirkung gebracht werden kann.

2. Längen- oder Winkelmeßeinrichtung nach Anspruch 1, dadurch gekennzeichnet, daß das Schaltmittel (10) zum Wählen der Betriebsart am Positionsanzeigegerät oder am Steuergerät vorgesehen ist.

3. Längen- oder Winkelmeßeinrichtung nach Anspruch 1, dadurch gekennzeichnet, daß mindestens zwei Teilungen (4, 5) mit jeweils gleichabständigen Referenzmarken (41 bis 43, 51 bis 54) vorgesehen sind, wobei sich die Abstände (A) der Referenzmarken (41 bis 43) der einen Teilung (4) um zumindest eine Teilungseinheit der Inkrementalteilung (3) von den Abständen (B) der Referenzmarken (51 bis 54) der weiteren Teilung (5) unterscheiden und die die Absolutposition bestimmenden Abstände jeweils zwischen den Referenzmarken (41 bis 43, 51 bis 54) einer Teilung (4) sowie der weiteren Teilung (5) durch Zählsignale der Inkrementalteilung (3) bestimmbar sind.

4. Längen- oder Winkelmeßeinrichtung nach Anspruch 3, dadurch gekennzeichnet, daß den Referenzmarken mehrerer Teilungen Auswahlmittel zuordbar sind.

5. Längen- oder Winkelmeßeinrichtung nach Anspruch 1, dadurch gekennzeichnet, daß wenigstens eine Teilung (5) Referenzmarken (55 bis 58) mit zueinander gleichen Abständen (B) besitzt, während wenigstens die andere Teilung (4) Referenzmarken (44 bis 47) aufweist, deren Abstand (A) zueinander unterschiedlich ist, wobei die wenigstens zwei Teilungen (4, 5) von Referenzmarken (44 bis 47, 55 bis 58) zur Bestimmung von Absolutpositionen wirkungsmäßig verknüpft sind, indem die die Absolutposition bestimmenden Abstände zwischen Referenzmarken (44 bis 47, 55 bis 58) mehrerer Teilungen (4, 5) durch Zählsignale der Inkrementalteilung (3) ermittelt werden.

6. Längen- oder Winkelmeßeinrichtung nach Anspruch 1, dadurch gekennzeichnet, daß wenigstens eine Teilung (5) Referenzmarken (55 bis 58) aufweist, die über die gesamte Meßlänge in zueinander gleichen Abständen (B) angeordnet sind, während wenigstens die andere Teilung (4) Referenzmarken (44 bis 47) aufweist, deren Abstände (A) zueinander unterschiedlich sind, wobei diese andere Teilung (4) zur Bestimmung von Absolutpositionen dient, indem die die Absolutpositionen bestimmenden Abstände (A) der Referenzmarken (44 bis 47) dieser Teilung (4) durch Zählsignale der Inkrementalteilung (3) ermittelt werden.

## Claims

1. A length or angle measuring device with at least one incremental graduation (3), with which are associated at least two further graduations (4, 5) in the form of spaced reference marks (41 to 47, 51 to 58) for determining absolute positions, of which at least one graduation (5) has reference marks (51 to 58) at equal distances (B) from one another, a sensing unit (2) which senses the incremental graduation (3) to form count signals and senses the reference marks (41 to 47, 51 to 58) to form reference mark pulses, and wherein the count signals and the reference mark pulses are fed to a position display device and/or a control device, and further with a switching means (10) with which the following operating modes can be selectively chosen:
a) sensing simultaneously the incremental graduation (3) and at least one of the reference mark graduations (4, 5), wherein distances (A, B) between reference marks (41 to 47, 51 to 58) characteristic of the absolute position are determined from the count signals or
b) sensing simultaneously the incremental graduation (3) and the graduation (5) with the reference marks (51 to 58) arranged with equal spacings (B), with which at least one selector means (11) can be associated, by means of which at least one of the reference marks (52, 58) determining the absolute position can be selected and thus be rendered operative.

2. A length or angle measuring device according to claim 1, characterized in that the switching means (10) for selecting the operating mode is provided on the position display device or on the control device.

3. A length or angle measuring device according to claim 1, characterized in that at least two graduations (4, 5) are provided with reference marks (41 to 43, 51 to 54) with respective equal spacings, wherein the spacing (A) of the reference marks (41 to 43) of the one graduation (4) differ by at least one graduation unit of the incremental graduation (3) from the spaces (B) of the reference marks (51 to 54) of the further graduation (5) and the respective spacings between the reference marks (41 to 43, 51 to 54) of one graduation (4) and of the further graduation (5) determining the absolute position can be determined by count signals of the incremental graduation (3).

4. A length or angle measuring device according to claim 3, characterized in that selector means can be associated with the reference marks of a plurality of graduations.

5. A length or angle measuring device according to claim 1, characterized in that at least one graduation (5) has reference marks (55 to 58) with spacings (B) which are equal to one another, while at least the other graduation (4) has reference marks (44 to 47) whose spacings (A) relative to one another are different, wherein the at least two graduations (4, 5) of reference marks (44 to 47, 55 to 58) are operatively combined for determining absolute positions, in that the spacings between reference marks (44 to 47, 55 to 58) of a plurality of graduations (4, 5) determining the absolute position are determined by count signals of the incremental graduation (3).

6. A length or angle measuring device according to claim 1, characterized in that at least one graduation (5) has reference marks (55 to 58) which are arranged with spacings from one another (B) which are equal over the whole measuring length, while at least the other graduation (4) has reference marks (44 to 47) whose spacings (A) relative to one another are different, wherein this other graduation (4) serves to determine absolute positions, in that the spacings (A) of the reference marks (44 to 47) of this graduation (4) determining the absolute positions are determined by count signals of the incremental graduation (3).

## Revendications

1. Dispositif de mesure de longueurs ou d'angles, avec au moins une graduation incrémentale (3), à laquelle sont associées au moins deux graduations (4, 5) supplémentaires, sous la forme de repères de référence (41 à 47, 51 à 58) espacés les uns des autres pour déterminer des positions absolues, parmi lesquelles au moins une graduation (5) présente des repères de référence (51 à 58) espacés les uns des autres d'une même distance (B), avec une unité de palpage (2) qui palpe la graduation incrémentale (2) pour former des signaux de comptage et les repères de référence (41 à 47, 51 à 58) pour former des impulsions de référence, les signaux de comptage ainsi que les signaux de référence étant transmis à un appareil d'affichage de position et/ou à un appareil de commande, et avec un moyen de commutation (10) à l'aide duquel les modes de fonctionnement suivants peuvent être sélectionnés au choix:
a) palpage de la graduation incrémentale (3) et, simultanément, d'au moins une des graduations de repères de référence (4, 5), les distances (A, B), caractéristiques de la position absolue entre les repères de référence (41 à 47, 51 à 58), étant déterminées à partir des signaux de comptage ou
b) palpage de la graduation incrémentale (3) et, simultanément, de la graduation (5) comportant des repères (51 à 58) espacés d'une même distance (B), auxquels peut être associé au moins un moyen de sélection (11), à l'aide duquel au moins un repère de référence (52, 58) déterminant la position absolue peut être sélectionné et activé.

2. Dispositif de mesure de longueurs ou d'angles selon revendication 1, caractérisé par le fait que le moyen de commutation (10) pour la sélection du mode de fonctionnement est prévu sur l'appareil d'affichage de la position ou sur l'appareil de commande.

3. Dispositif de mesure de longueurs ou d'angles selon revendication 1, caractérisé par le fait qu'il est prévu au moins deux graduations (4, 5) avec chacune des repères de référence (41 à 43, 51 à 54) espacés les uns des autres d'une même distance, les distances (A) entre les repères de référence (41 à 43) de l'une (4) des graduations différant d'au moins une unité de graduation de la graduation incrémentale (3) par rapport aux distances (B) entre les repères de référence (51 à 54) de l'autre (5) graduation et les distances déterminant la position absolue entre les repères de référence (41 à 43, 51 à 54) *respectifs* de l'une (4) et de l'autre (5) graduation, pouvant être déterminés à partir des signaux de comptage de la graduation incrémentale (3).

4. Dispositif de mesure de longueurs ou d'angles selon revendication 3, caractérisé par le fait que des moyens de sélection peuvent être associés aux repères de référence de plusieurs graduations.

5. Dispositif de mesure de longueurs ou d'angles selon revendication 1, caractérisé par le fait qu'au moins une graduation (5) comporte des repères de référence (55 à 58) qui sont espacés les uns des autres d'une même distance (B), tandis qu'au moins l'autre graduation (4) comporte des repères de référence (44 à 47) qui sont espacés les uns des autres d'une distance (A) différente, les graduations (4, 5) des repères de référence (44 à 47, 55 à 58), au nombre d'au moins deux, étant combinées au niveau de leur action pour déterminer la position absolue, en ce sens que les distances déterminant la position absolue entre des repères de référence (44 à 47, 55 à 58) de plusieurs graduations (4, 5) sont déterminées par des signaux de comptage de la graduation incrémentale (3).

6. Dispositif de mesure de longueurs ou d'angles selon revendication 1, caractérisé par le fait qu'au moins une graduation (5) comporte des repères de référence (55 à 58) qui sont espacés les uns des autres d'une même distance (B) sur toute la longueur de mesure, tandis qu'au moins l'autre graduation (4) comporte des repères de référence (44 à 47) qui sont espacés les uns des autres d'une distance (A) différente, l'autre graduation (4) servant à déterminer la position absolue, en ce sens que les distances (A) déterminant la position absolue entre les repères de référence (44 à 47) de cette graduation (4) sont déterminées par des signaux de comptage de la graduation incrémentale (3).
